# EUROPEAN PATENT SPECIFICATION

(11) **EP 2 825 486 B1**
(45) Date of publication and mention of the grant of the patent: **02.01.2019**
(21) Application number: 13762018.3
(22) Date of filing: 05.03.2013
(51) Int. Cl.: B65G 15/42, B65H 5/02, G03G 15/00, B41J 2/005

(54) **ENDLESS FLEXIBLE BELT FOR A PRINTING SYSTEM**
FLEXIBLER ENDLOSRIEMEN FÜR EIN DRUCKSYSTEM
COURROIE SOUPLE SANS FIN POUR UN SYSTÈME D'IMPRESSION

(30) Priority: 15.03.2012 US 201261611505 P; 15.03.2012 US 201261611497 P; 18.04.2012 US 201261635180 P
(43) Date of publication of application: 21.01.2015
(73) Proprietor: Landa Corporation Ltd., 7612301 Rehovot (IL)
(72) Inventor: LANDA, Benzion, 7405135 Nes Ziona (IL); ABRAMOVICH, Sagi, 4339320 Ra'anana (IL); SHMAISER, Aharon, 7573430 Rishon Le Zion (IL); KELLER, Rami, 6226505 Tel Aviv (IL); ASHKANAZI, Itshak, 7691000 Rehovot (IL)
(74) Representative: Harrison IP Limited
(86) International application number: PCT/IB2013/051719
(87) International publication number: WO 2013/136220

(56) References cited:
- WO-A2-2013/132418
- JP-A- 2002 169 383
- JP-A- 2002 326 733
- JP-A- 2003 114 558
- US-A- 4 009 958
- US-A- 4 535 694
- US-A- 5 884 559
- US-A1- 2004 020 382
- US-A1- 2005 082 146
- US-A1- 2007 029 171
- US-A1- 2012 287 260
- US-B2- 6 970 674
- US-B2- 6 974 022

## Description

### FIELD OF THE INVENTION

The present invention relates to an endless flexible belt for a printing system. The endless belt of the invention finds particular application as an intermediate transfer member in a printing system for an offset printer in which, instead of ink being applied directly onto a substrate, a mirror reflection of the desired image is formed by ink deposition (*e.g.* ink jetted droplets) on the intermediate transfer member, the latter then serving to transport the image to an impression station at which the image is impressed on a substrate. In its different aspects, the invention is concerned with a flexible belt for use in a printing system, a belt system that comprises such a belt, and an apparatus for installing such a belt in a belt system.

### BACKGROUND

Digital printing techniques have been developed that allow a printer to receive instructions directly from a computer without the need to prepare printing plates. Amongst these are color laser printers that use the xerographic process. Color laser printers using dry toners are suitable for certain applications, but they do not produce images of a photographic quality acceptable for publications, such as magazines.

A process that is better suited for short run high quality digital printing is used in the HP-Indigo printer. In this process, an electrostatic image is produced on an electrically charged image bearing cylinder by exposure to laser light. The electrostatic charge attracts oil-based inks to form a color ink image on the image bearing cylinder. The ink image is then transferred by way of a blanket cylinder onto paper or any other printing medium, the substrate.

Inkjet and bubble jet processes are commonly used in home and office printers. In these processes droplets of ink are sprayed onto a final substrate in an image pattern. In general, the resolution of such processes is limited due to wicking by the inks into paper substrates. Fibrous substrates, such as paper, generally require specific coatings engineered to absorb the liquid ink in a controlled fashion or to prevent its penetration below the surface of the substrate. Using specially coated substrates is, however, a costly option that is unsuitable for certain printing applications. Furthermore, the use of coated substrates creates its own problems in that the surface of the substrate remains wet and additional costly and time consuming steps are needed to dry the ink so that it is not later smeared as the substrate is being handled, for example stacked or wound into a roll. Furthermore, excessive wetting of the substrate causes cockling and makes printing on both sides of the substrate (also termed perfecting or duplex printing) difficult, if not impossible. Additionally, direct inkjet printing may result in poor image quality because of variation of the distance between the print head and the surface of the substrate.

Using a printing technique based on an intermediate transfer step overcomes many problems associated with inkjet printing directly onto the substrate. It allows the distance between the surface of the image transfer member and the inkjet print head to be maintained constant, and reduces wetting of the substrate as the ink can be dried on the image transfer surface before being applied to the substrate. Consequently, the final image quality on the substrate is less affected by the physical properties of the substrate.

The use of transfer members which receive ink droplets from an ink or bubble jet apparatus to form an ink image and transfer the image to a final substrate have been reported in the patent literature. Various ones of these systems utilize inks having aqueous carriers, non-aqueous carrier liquids or solid inks that have no carrier liquid at all.

The use of aqueous based inks has a number of distinct advantages. Compared to non-aqueous based liquid inks, the carrier liquid is not toxic and there is no problem in dealing with the liquid that is evaporated as the image dries. As compared with solid inks, the amount of material that remains on the printed image can be controlled, allowing for thinner printed images and more vivid colors.

Generally, a substantial portion or even all the liquid is evaporated from the image on the transfer member before the image is transferred to the final substrate, in order to avoid bleeding of the image into the structure of the final substrate. Various methods are described in the literature for removing the liquid, including heating the image and a combination of coagulation of the image particles on the transfer member, followed by removal of the liquid by heating, air knife or other means.

Co-pending PCT application No. PCT/IB2013/051716 (Agent's reference LIP 5/001 PCT), which claims priority from US Provisional Patent Application No. 61/606,913, teaches a printing process designed to use aqueous inks. The disclosure of the latter application overlaps with disclosure provided herein but it should be made clear that the present invention is not restricted in its application to such a process and may be used in any printing system that uses an intermediate transfer member constructed as a flexible belt regardless of whether or not the ink is water based, hence regardless of the type of release layer suitable to accommodate the ink or printing process being used.

US 2004/020382 describes an indirect printing system in which the belt acting as intermediate transfer member has greater stiffness to bending in the lateral direction than in the longitudinal direction.

US 2007/029171 describes an apparatus and method for conveying materials, such as wet chips, in which a conveyor belt has chord members located along each side of the belt that are adapted to fit within a slotted track assembly.

The invention seeks in particular to provide a flexible belt that remains in a well defined plane as it travels around an endless path and that is constrained laterally to prevent it from meandering.

### SUMMARY OF THE INVENTION

In accordance with the invention, there is provided a flexible belt for use in a printing system as hereinafter set forth in Claim 1 of the appended claims.

In an embodiment of the invention intended for use as an intermediate transfer member in a printing system, the strip is an initially elongate strip having parallel straight sides of which the ends are releasably or permanently securable to one another to form an endless loop, and, when in use, the belt serves to transport ink images from an image forming station to an impression station of the printing system.

The ends of the elongate strip may be secured to one another in a releasable manner (*e.g.* zip fastener, hooks or magnets) or permanently by soldering, gluing, or taping (*e.g.* using Kapton® tape, RTV liquid adhesives or PTFE thermoplastic adhesives with a connective strip overlapping both ends of the strip), or by any other method commonly known. Any previously mentioned method of joining the ends of the belt may cause a discontinuity, referred to herein as a seam, and it is desirable to avoid an increase in the thickness or discontinuity of chemical and/or mechanical properties of the belt at the seam.

In an alternative embodiment, the belt is devoid of a seam and is formed as a continuous belt.

The strip from which the belt is made generally comprises at least a reinforcement layer and a release layer. In some embodiments, the belt additionally includes a compressible layer so that the belt may itself serve in a manner analogous to the blanket of an offset litho press. In other embodiments, a blanket cylinder carrying a compressible blanket, also termed a pressure cylinder, may be provided at the impression station, and the belt, which may then be optionally devoid of a compressible layer, may pass between a pressure cylinder and an impression cylinder in order for the ink image that it carries to be impressed on the substrate.

In some embodiments of the invention, each side of the strip from which the belt is made is provided with spaced formations. Such spaced formations may conveniently be the teeth of one half of a zip fastener that is secured to the belt along the respective side of the strip. The laterally projecting formations need not be evenly spaced and in an embodiment of the invention a predetermined irregular spacing may serve to control parameters associated with the use of the belt in a printing system.

In an alternative embodiment, the formations may comprise two flexible beads, arranged one on each side of the strip, the beads having a diameter larger than the thickness of the belt. In this arrangement, the bead is considered to provide a continuous formation on each side of the strip.

In an alternative embodiment, the formations may be a combination of beads and lateral spaced projections. The combination advantageously permits identification of belt sections corresponding to the lateral projection adjacent to that section, each section having unique projection characteristics (*e.g.* color, shape, *etc*.). Additionally or alternatively, each side of the strip may have different formations.

The formations, irrespective of shape, spacing along the edges or lack thereof, can be made of any material having heat resistivity compatible with the operating temperature at which the belt is used. Preferably, the formations may be made of a material having a low friction coefficient to ensure their smooth running within the lateral tracks. Using materials having satisfactory abrasion resistance can advantageously reduce or prevent the formation of debris that may result from the rapid displacement of a belt during the printing process. In one embodiment, the formations are made of a material having or comprising an agent having lubricating properties. Lamellar materials may serve as lubricating agents in the formations positioned at the side of the belt. In one embodiment, the formations used for the lateral guidance of the belt are made of a nylon or polyamide polymer supplemented with molybdenum disulfide or from polyacetal filled with PFTE. Alternatively, or in addition, the formations may have an anti-friction coating, such as PTFE.

As an alternative, or in addition, the track with which the formations engage may be lubricated or anti-friction coated or impregnated with an agent able to reduce friction. In one embodiment, the lateral tracks are made of anodized aluminum or of stainless steel. The porosity of the material may advantageously be used to impregnate the lateral tracks with an anti-friction agent, such as PTFE.

As an alternative or in addition, the track and formations may have opposing magnetic properties thereby creating repulsive forces between each other, thus lessening frictional forces.

In some embodiments, the spaced formations or the flexible beads may be retained in the tracks by rollers that rotate as the belt moves along the track.

In some embodiments, the ends of the strip may be secured to one another to form a continuous loop using end formations similar to the formations projecting laterally from the strip to enable belt tensioning and/or guiding along the tracks. For example, the ends of the strip may each be secured to one half of a zipper.

In a second aspect of the invention, a belt as set out above forms part of a belt system having a support frame having supporting surfaces for guiding and driving the belt, wherein the support frame further includes two lateral tracks, extending one on each side of the belt, each track being of suitable cross-section to slidably retain the formations on the sides of the belt. For example, lateral formations having an approximate circular cross-section may be retained by tracks having a C-shaped cross-section. In some embodiments, the surfaces for guiding and driving the belt comprise rotating rollers but other means of supporting the belt, such as a pneumatic table or linear drive, may alternatively be used. Such support may be provided by indirect or intermittent contact. In one embodiment, a single roller may suffice, a situation corresponding to the belt being mounted on a drum.

In some embodiments, lateral guiding tracks are provided to guide and tension the belt only in the region of the image forming station. In some embodiments, lateral guiding tracks are additionally provided at the impression station at which the image is impressed on the substrate. In some embodiments, lateral guiding tracks are additionally provided at strategic positions such as drying station(s), cooling station(s), conditioning station, *etc.* In still further embodiments, continuous guide tracks are provided around the full circumference of the support frame of the belt system along the path to be followed by the belt.

In an embodiment, plates are mounted on the support frame having support surfaces contacting the inner side of the belt, the support surfaces lying in a plane offset from a flat plane passing through the two tracks such that lateral tension in the belt, resulting from engagement of the formations in the tracks, serves to flatten the belt against the support surfaces.

In accordance with a further aspect, the invention provides an apparatus for assembling a belt system comprising
a) an elongate strip having parallel straight sides, formations along the length of the sides of the strip, and two ends securable to one another to form an endless loop flexible belt; and
b) a support frame having surfaces for supporting the belt and including two tracks, extending one on each side of the belt, each track having a cross section suitable to retain slidably the formations on the sides of the belt;
said assembling apparatus comprising
i) a rigid body defining two open-ended tracks, arranged one on each side of the body, for receiving the formations on the sides of the strip; a first end permitting introduction into the tracks of formations on the sides of a strip that is to be looped to form a belt, and the second end of each track being engageable with branch entry points provided in a respective one of the endless tracks of the support frame; and
ii) at least one sprocket rotatably mounted on the body to engage with the formations located within one of the open-ended tracks to feed the elongate strip into the endless tracks.

Two sprockets may be mounted on a common shaft to engage with the formations lying within both open-ended tracks and the sprockets may be mounted on a common shaft, driven manually or by an electric motor.

To assist in applying a lateral stress to the belt during its mounting on the support frame, the open-ended tracks may be divergent, being more closely spaced apart from each other at the first one end than at the second end.

An anchoring may furthermore be provided to permit the body of the apparatus to be secured to the support frame of the belt to ensure accurate guidance of the belt as it is fed onto the support frame.

In an alternative embodiment, the belt may be installed by securing the leading edge of the belt strip introduced first in between the lateral tracks to a cable which can be manually or automatically moved to install the belt. For example, one or both lateral ends of the belt leading edge can be reversibly attached to a cable residing within each track. Advancing the cable(s) in turn advances the belt along the tracks. Alternatively or additionally, the edge of the belt in the area ultimately forming the seam when both edges are secured one to the other can have lower flexibility than in the areas other than the seam. This local "rigidity" may ease the insertion of the lateral formations of the belt strip into their respective tracks.

### BRIEF DESCRIPTION OF THE DRAWINGS

The invention will now be described further, by way of example, with reference to the accompanying drawings, in which the dimensions of components and features shown in the figures are chosen for convenience and clarity of presentation and not necessarily to scale. In the drawings:
Figure 1 is a schematic perspective view of a sheet-fed printing system;
Figure 2 is a schematic vertical section through the printing system of Figure 1 in which the various components of the printing system are not drawn to scale;
Figure 3 is a perspective view of a belt support system with the belt removed;
Figure 4 shows a section through the belt support system of Figure 3 showing its internal construction;
Figure 5 is a perspective cross-sectional view of a printing system intended for printing on a continuous web of the substrate;
Figure 6 is a schematic plan view of a first embodiment of a belt in accordance with the invention;
Figure 7 is a schematic plan view similar to that of Figure 6 showing an alternative embodiment of the invention;
Figure 8 is a detail of the belt support frame showing a track for retaining the formations on the sides of the strip in Figure 4;
Figure 9 is a schematic representation of an apparatus for installing a belt in the support system of Figure 3 or Figure 11;
Figure 10 is a section along the line X-X in Figure 9;
Figure 11 is a schematic representation of a printing system operating on the same principle as the printing system of Figure 1 to 5 but having an alternative architecture;
Figure 12 is generally similar to Figure 6 or 7 and shows an alternative design of the strip from which the belt used in Figures 1 to 5 or in Figure 11 is made; and
Figure 13 shows a section through a track for receiving the formations of the belt used in the embodiment of Figures 1 to 5 or in Figure 11.

### DETAILED DESCRIPTION OF THE ILLUSTRATED EMBODIMENTS

### General overview

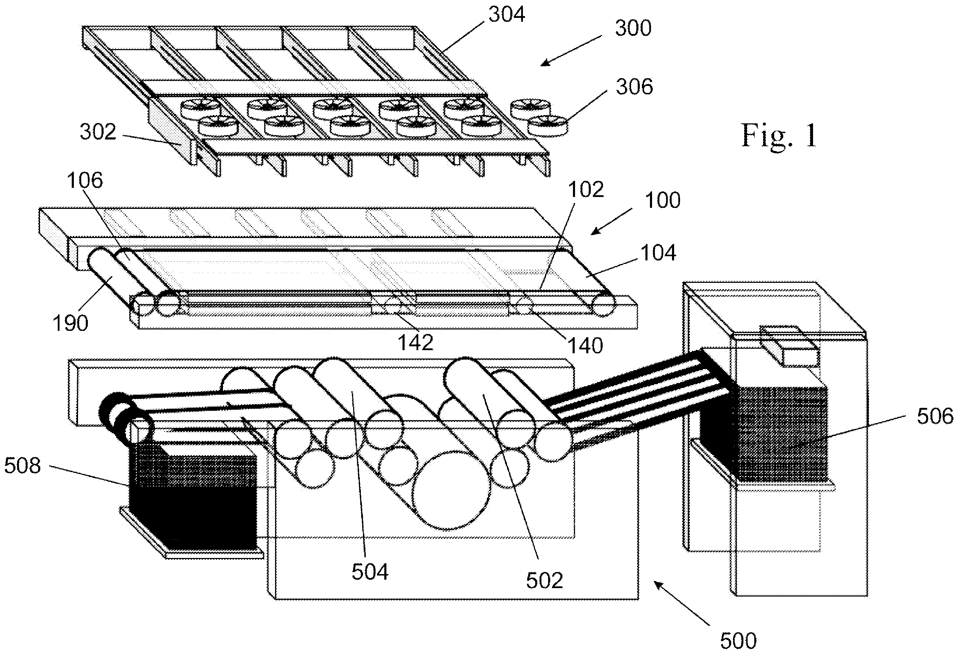

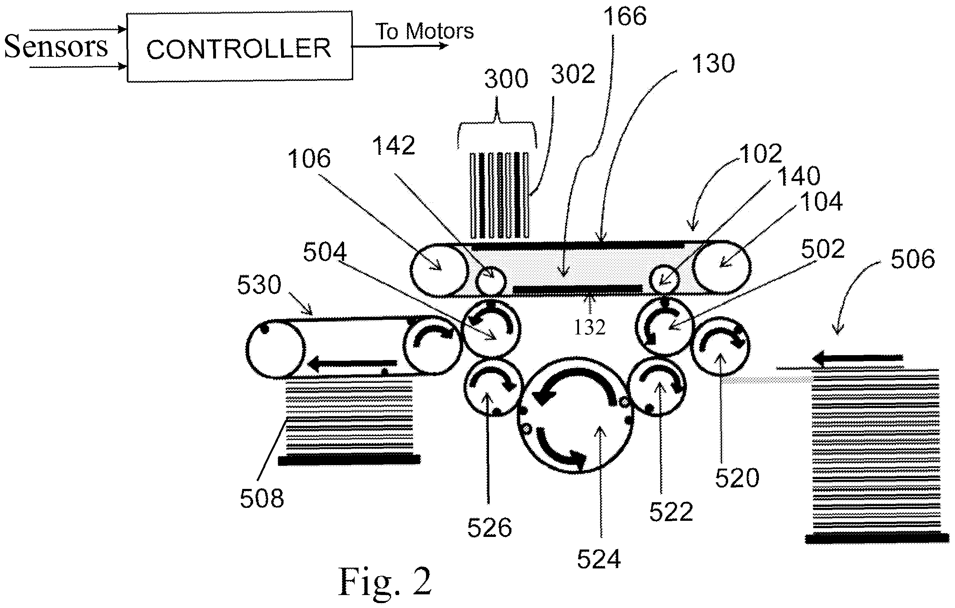

The printing system shown in Figures 1 and 2, which operates in accordance with the principles taught in PCT/IB2013/051716, essentially comprises three separate but mutually interacting systems, namely a belt system **100,** an image forming system **300** above the belt system **100** and a substrate transport system **500** below the belt system **100.**

The belt system **100,** with which the present invention is primarily concerned, comprises an endless belt or blanket **102,** that acts as an intermediate transfer member and is guided over two rollers **104, 106.** An image made up of dots of an ink is applied by the image forming system **300** to the upper run of the belt **102** at an image forming station and the lower run selectively interacts at two impression stations with two impression cylinders **502** and **504** of the substrate transport system **500** to impress an image onto a substrate compressed between the belt **102** and the respective impression cylinder **502, 504.** As will be explained below, the purpose of there being two impression stations is to permit duplex printing. In the case of a simplex printing system, only one impression cylinder would be needed.

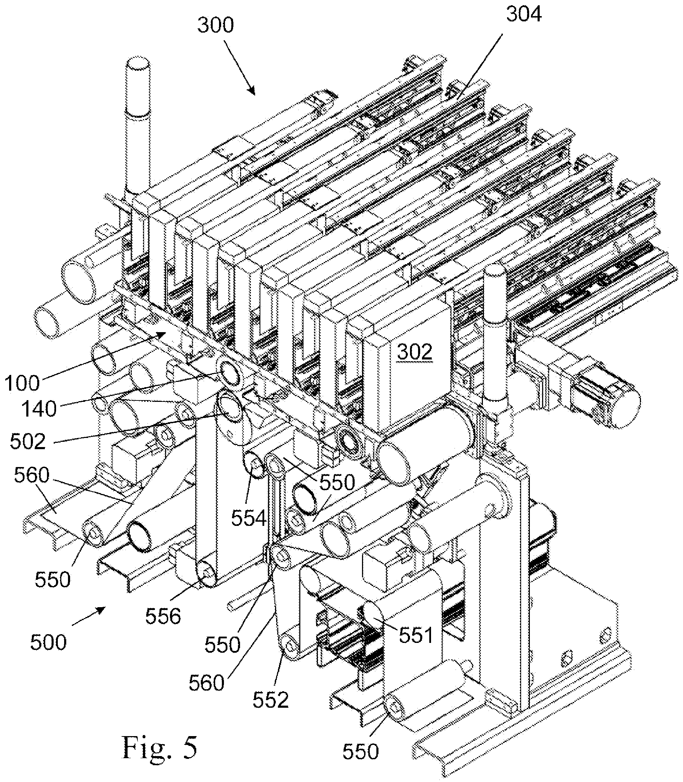

In operation, ink images, each of which is a mirror image of an image to be impressed on the substrate, are printed by the image forming system **300** onto the upper run of the belt **102.** In this context, the term "run" is used to mean a length or segment of the belt between any two given rollers over which the belt is guided. While being transported by the belt **102,** the ink is dried by irradiation and/or the application of heat and/or a gas stream, to render tacky the ink residue remaining after evaporation of most, if not all, of the liquid carrier. At the impression stations, the image is impressed onto individual sheets of a substrate which are conveyed by the substrate transport system **500** from an input stack **506** to an output stack **508** via the impression stations. As an alternative, as shown in Figure 5, the substrate may be a continuous web extending between an input supply roll and an output take-up roll.

### Image Forming System

The image forming system **300** comprises inkjet print bars **302** each slidably mounted on a frame **304** positioned at a fixed or adjustable height above the surface of the belt **102.** Each print bar **302** may include a plurality of print heads with individually controllable print nozzles. The print heads are together as wide as the printing area on the belt **102** though the print bars **302** may be wider than the belt. The printing system can have any number of bars **302,** each of which may contain an ink of a different color.

As some print bars may not be required during a particular printing job, the bars can be moved between an operative position, in which they overlie the belt **102** and an inoperative position. One such mechanism for moving the bars **302** between their operative and inoperative positions is schematically shown in Figure 5, but need not be described herein. It should be noted that the print bars remain stationary during printing.

When moved to their inoperative position, the bars are covered for protection and to prevent the nozzles of the print bar from drying or clogging. In an embodiment of the invention, the print bars are parked above a liquid bath that assists in this task. Print bars that are in the inoperative position can be changed and accessed readily for maintenance, even while a printing job is in progress using other print bars.

Within each print bar, the ink may be constantly recirculated, filtered, degased and maintained at a desired temperature and pressure. As the design of the print bars may be conventional, or at least similar to print bars used in other inkjet printing applications, their construction and operation will be clear to the person skilled in the art without the need for more detailed description.

As the different print bars **302** are staggered from one another along the length of the belt, it is of course essential for their operation to be correctly synchronized with the movement of the belt **102.**

### Belt and Belt Support System

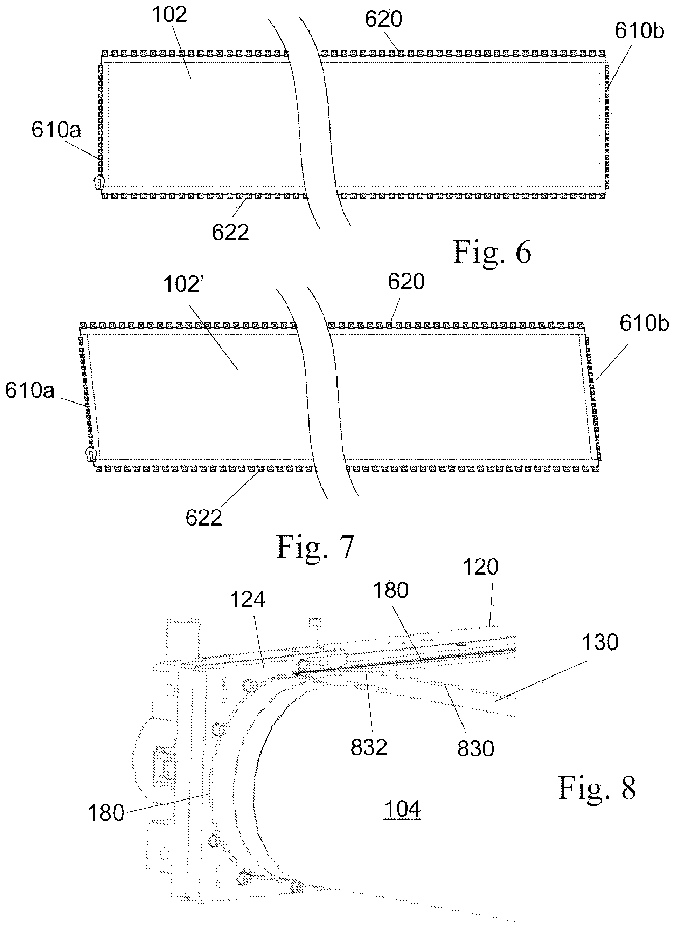

The belt **102** in the present invention is releasably or permanently seamed. In particular, as shown in Figure 6, the belt **102** is formed of an initially flat strip of which the ends are fastened to one another to form a continuous loop. A releasable fastening is illustrated in Figure 6 which is formed of zip fastener of which the two halves **610a** and **610b** are secured to the opposite ends of the belt **102.** As an alternative, a releasable fastener may be a hook and loop fastener. In the embodiment illustrated in Figure 6, the fastener **610a, 610b** lies substantially parallel to the axes of the rollers **104** and **106** over which the belt is guided. In order to avoid a sudden change in the tension of the belt as the seam passes over these rollers, the belt **102'** in an embodiment of the invention illustrated in Figure 7 has ends that are slightly inclined relative to the axis of the rollers. As this has the effect of enlarging the non-printable image area, the angle of inclination is desirably kept small, being preferably less than 10° or more preferably in the range of 2° to 8°.

Alternatively, the belt can be seamless, hence relaxing certain constraints from the printing system (*e.g.* synchronization of seam's position) while requiring alternative mounting methods. Whether seamless or not, the primary purpose of the belt in one embodiment of the invention is to receive an ink image from the image forming system and to transfer that image dried but undisturbed to the impression stations formed by the engagement of the belt in-between an impression cylinder and a corresponding pressure or nip roller. To allow easy transfer of the ink image at each impression station, the belt has a thin upper release layer that may be hydrophobic, being formed, for example, of a silicone containing composition.

The strength of the belt is derived from a reinforcement layer. In one embodiment, the reinforcement layer is formed of a fabric. If the fabric is woven, the warp and weft threads of the fabric may have a different composition or physical structure so that the belt should have, for reasons to be discussed below, greater elasticity in its width ways direction (parallel to the axes of the rollers **104** and **106**) than in its lengthways direction. The fabric can be fiber-reinforced so as to be substantially inextensible lengthwise. By "substantially inextensible", it is meant that during any cycle of the belt, the distance between any two fixed points on the belt will not vary to an extent that will affect the image quality. The length of the belt may however vary with temperature or, over longer periods of time, with ageing or fatigue. In its width ways direction, the belt may have a small degree of elasticity to assist it in remaining taut and flat as it is pulled through the image forming station. A suitable fabric may, for example, have high performance fibers, such as glass, carbon, ceramic or aramid fibers, in its longitudinal direction woven, stitched or otherwise held with cotton fibers in the perpendicular direction.

The belt may comprise additional layers between the reinforcement layer and the release layer, for example to provide conformability of the release layer to the surface of the substrate, *e.g.* a compressible layer and a conformational layer, to act as a thermal reservoir or a thermal insulator, to allow an electrostatic charge to be applied to the surface of the release layer, to improve the adhesion or compatibility between any layers forming the belt, and/or to prevent migration of molecules therebetween. An inner layer may further be provided to control the magnitude of frictional forces on the belt as it is moved over its support structure.

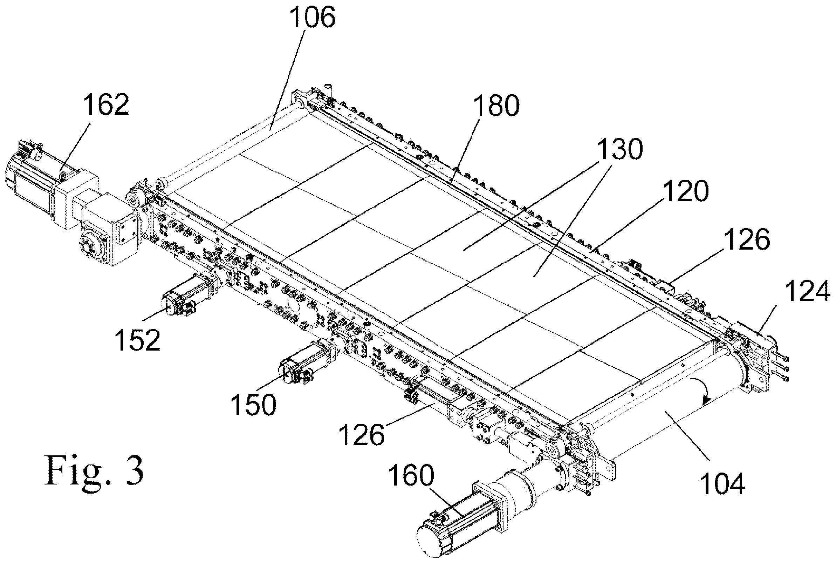

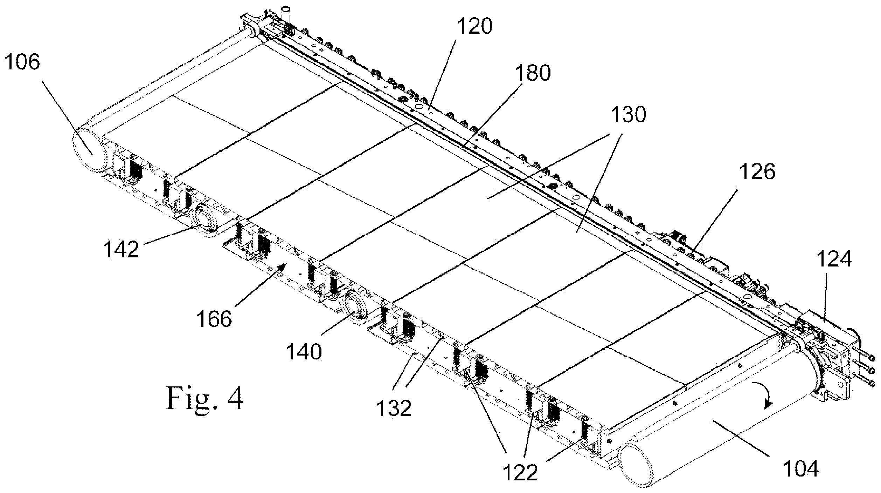

A structure capable of supporting a belt according to the invention is shown in Figures 3 and 4. Two elongate outriggers **120** are interconnected by a plurality of cross beams **122** to form a horizontal ladder-like frame on which the remaining components are mounted.

The roller **106** is journalled in bearings that are directly mounted on the outriggers **120.** At the opposite end, however, the roller **104** is journalled in pillow blocks **124** that are guided for sliding movement relative to the outriggers **120.** Electric motors **126,** which may be stepper motors, act through suitable gearboxes to move the pillow blocks **124,** so as to alter the distance between the axes of the rollers **104** and **106,** while maintaining them parallel to one another.

Thermally conductive support plates **130** are mounted on the cross beams **122** to form a continuous flat support surface both on the top side and the bottom side of the support frame. The junctions between the individual support plates **130** can be intentionally zigzagged in order not to create a line running parallel to the length of the belt **102.** Electrical heating elements **132** can be inserted into transverse holes in the plates **130** to apply heat to the plates **130** and through the plates **130** to the overlying belt **102.**

Also mounted on the belt support frame are two pressure or nip rollers **140, 142.** The pressure rollers are located on the underside of the support frame in gaps between the support plates **130** covering the underside of the frame. The pressure rollers **140, 142** are aligned respectively with the impression cylinders **502, 504 of** the substrate transport system.

Each of the pressure rollers **140, 142** is mounted on an eccentric that is rotatable by a respective actuator **150, 152.** When it is raised by its actuator to an upper position within the support frame, each pressure roller is spaced from the opposing impression cylinder, allowing the belt to pass by the impression station without making contact with the impression cylinder itself nor with a substrate carried by the impression cylinder. On the other hand, when moved downwards by its actuator, each pressure roller **140, 142** projects downwards beyond the plane of the adjacent support plates **130** and deflects the belt **102,** urging it against the opposing impression cylinder **502, 504.**

The rollers **104** and **106** are connected to respective electric motors **160, 162.** The motor **160** serves to drive the belt clockwise as viewed in Figures 3 and 4. The motor **162** is used to provide a torque reaction and can serve regulate the tension in the upper run of the belt.

In one embodiment of the invention, the motors operate at the same speed, to maintain the same tension in the upper and lower runs of the belt.

In an alternative embodiment of the invention, the motors **160** and **162** are operated in such a manner as to maintain a higher tension in the upper run of the belt where the ink image is formed and a lower tension in the lower run of the belt. The lower tension in the lower run may assist in absorbing sudden perturbations caused by the abrupt engagement and disengagement of the belt **102** with the impression cylinders **502** and **504.**

In an embodiment of the invention, a fan or air blower (not shown) is mounted on the frame to maintain a sub-atmospheric pressure in the volume **166** bounded by the belt and its support frame. The negative pressure serves to maintain the belt flat against the support plates **130** on both the upper and the lower side of the frame, in order to achieve good thermal contact. If the lower run of the belt is set to be relatively slack, the negative pressure would also assist in and maintaining the belt out of contact with the impression cylinders when the pressure rollers **140, 142** are not actuated at the impression stations.

Each of the outriggers **120** also supports a continuous track **180,** shown in more detail in Figure 8, which engages formations on the side edges of the belt **102** to maintain the belt taut in its width ways direction. The formations may be flexible continuous beads or the teeth of two halves of a zip fastener (designated **620** and **622** in Figures 6 and 7) attached to the side edge of the belt **102** and the track **180** may be a channel of a suitable cross-section, for example C-shape, to receive the teeth. As can be seen in Figure 8, the upper surface **830** of the support plates **130** is offset from the plane of the tracks **180** and the sides of the plates **130** have ramped surfaces **832** to avoid the belt being stretched over any sharp edges. The effect of this shaping of the plates **130** is that the lateral tension in the belt **102** tends to flatten its central region against the support plates **130.** To reduce drag, in an embodiment of the invention, the lateral projecting formations are coated with an anti-friction coating though it is alternatively possible to lubricate the track **180** or coat it with an anti-friction layer. The formations are preferably made of a material having low friction, high abrasion resistance and "self lubricating" properties. When used in printing systems requiring elevated temperatures, the material is suitably temperature resistant. Likewise, the tracks can be made of a suitable material impregnated with an anti-friction agent.

Though the lateral tracks may be made of an anodized aluminum or stainless steel, it has been found that lateral tracks having higher hardness and/or lesser asperities (e.g. having a more polished surface interface with the lateral formations of the belt) are less prone to debris formation.

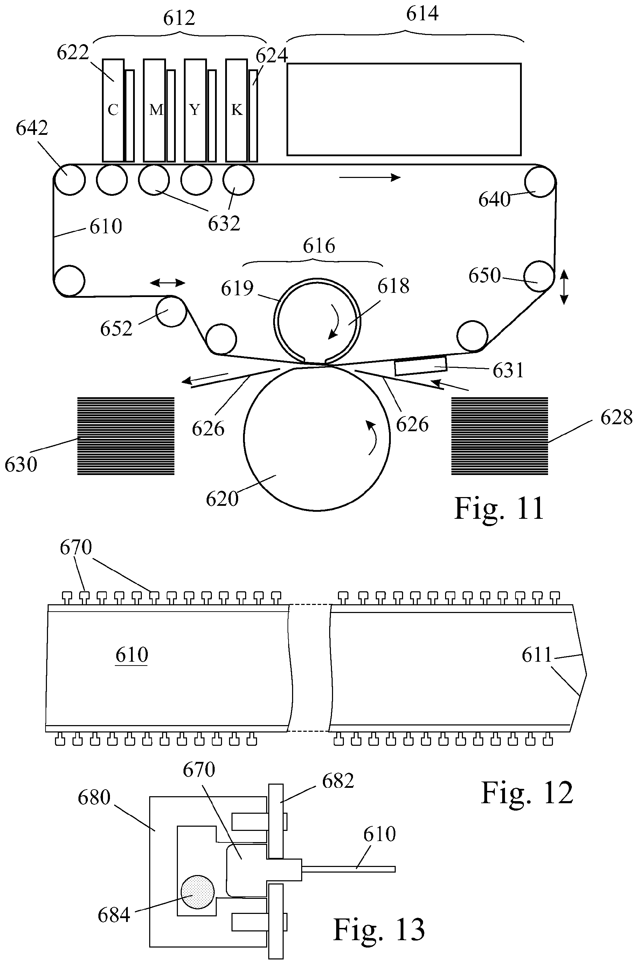

As a further alternative, the tracks may, as will be described below by reference to Figure 13, have rollers that serve to retain the spaced formations within the tracks.

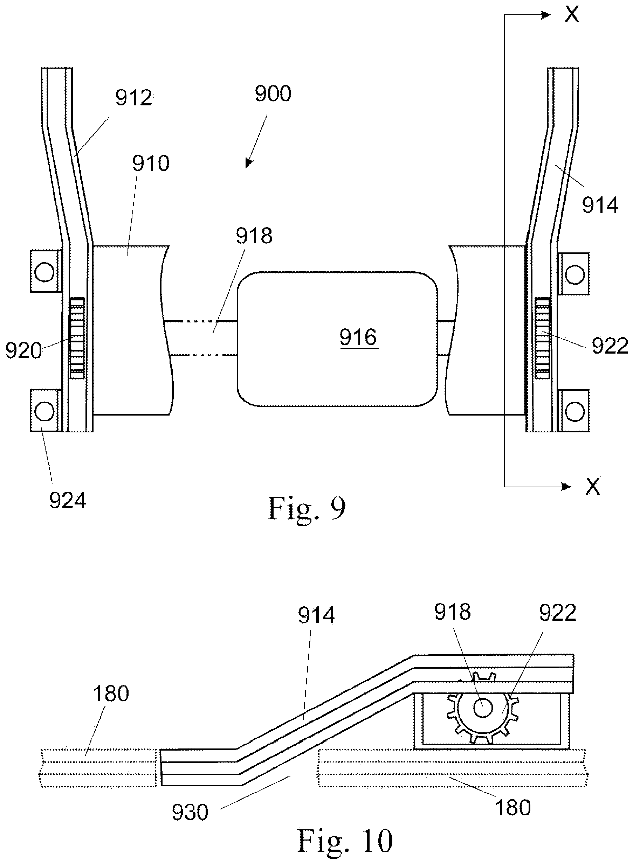

To mount a seamed belt on its support frame, an apparatus as shown in Figures 9 and 10 may be used. The apparatus **900** comprises a body **910** carrying at its opposite ends a pair of open-ended tracks **912, 914,** similar in their cross-section to the tracks **180.** The body **910** houses an electric motor **916** having an output shaft **918** that extends the full width of the body **910.** At its opposite ends, the shaft is keyed into two drive sprockets **920, 922** that extend into the tracks **912** and **914,** respectively. Anchoring points **924** are also provided on the body **910** to allow the apparatus to be secured relative to the frame of the belt system.

The open ended tracks **912, 914** are bent in two planes. First, when viewed from above, as in Figure 9, the tracks are more widely spaced apart from each other at a strip exit end than at the entry end. Furthermore, when viewed from the side, as shown in Figure 10, the entry end of each track **912, 914** which engages with one of the sprockets **920, 922,** is higher than the exit end which, in use, is positioned in alignment with a section of the endless track **180.**

To mount on the support frame a belt that is to be seamed, the apparatus of Figure 9 is first secured to the support frame using the anchoring points **924** so that the second ends of the open-ended tracks **912, 924** sit within entry points **930** in the endless tracks **180.** The side edges on the opposite sides of the belt strip **102** are next inserted into the entry ends of the open-ended tracks **912, 914** and advanced manually until the formations engage the sprockets **920, 922.** When the motor **916** is engaged to drive the sprockets **920, 922,** it will advance the belt strip towards the exit ends and then into the endless tracks **180,** at the same time placing the strip under lateral tension. The belt strip **102** is then fed into the endless tracks **180** and advanced until it has been wrapped around the entire support frame, whereupon its ends may be zipped or otherwise attached together to form a continuous loop. Next, the rollers **104** and **106** may be moved apart to extend the belt to its desired length.

Sections of the tracks **180** are telescopically collapsible to provide suitable entry points for inserting and withdrawing a belt strip and to permit the length of the endless tracks **180** to vary as the distance between the rollers **104** and **106** is varied. Additionally or alternatively, there may be a gap in the track to allow for insertion of the belt.

It should be mentioned that it is not essential to use a separate apparatus for the purpose of installing a belt as it would alternatively be possible to integrate the assembling apparatus into the tracks **180.** Furthermore, for belt replacement, it is possible to secure the end of the old belt to the end of a new one and to use the old belt and one of the drive rollers **104, 106** to advance the new belt into position.

Because the belt may contain an unusable area resulting from the seam, it is important to ensure that this area should always remain in the same position relative to the printed images in consecutive cycles of the belt. Also, during simplex printing, when one of the pressure rollers may be permanently engaged with its impression cylinder at an impression station, it is important to ensure that whenever the seam passes the impression cylinder, it always coincides with a time when an interruption in the surface of the impression cylinder that accommodates the substrate grippers. For such timing to be possible, it is important to set the length of the belt to be a whole number multiple of the circumference of the impression cylinders **502, 504.** This relationship can be achieved by moving the rollers **104, 106** apart using the motors **126.** The length of the belt can be determined from a shaft encoder measuring the rotation of one of rollers **104, 106** during one sensed complete revolution of the belt and a closed loop control system may be used to maintain the length of the belt at its desired value.

If the seam position is noted to be moving towards an image area of the belt, an alternative method by which it can be adjusted is to vary the speed of the belt **102** at times when it is not engaged with the impression cylinders **502, 504** at the impression stations.

The position of the belt can be monitored by means of one or more markings on the surface or edges of the belt that can be detected by one or more sensors mounted at different positions along the length of the belt. The output signals of these sensors are used to indicate the position of the intermediate transfer member to the printing bars of the image forming system **300.** For example, such system of belt markings and corresponding detectors may be used to monitor the position of the seam with respect to the cylinders of the impression stations. Analysis of the output signals of the sensors is also used to control the speed of the motors **160** and **162** to match that of the impression cylinders **502, 504.** The marker(s) may for example be located on the surface of the belt and can be sensed magnetically or optically by a suitable detector, or it may be an irregularity in the lateral formations that are used to maintain the belt under tension, for example a missing tooth or a formation of different geometry, hence forming a mechanical type of signal.

It is further possible to incorporate into the belt an electronic circuit, for example a microchip similar to those to be found in "chip and pin" credit cards, in which data may be stored. The microchip may comprise only read only memory, in which case it may be used by the manufacturer to record such data as where and when the belt was manufactured and details of the physical or chemical properties of the belt. The data may relate to a catalog number, a batch number, and any other identifier allowing providing information of relevance to the use of the belt and/or to its user. This data may be read by the controller of the printing system during installation or during operation and used, for example, to determine calibration parameters. Alternatively, or additionally, the chip may include random access memory to enable data to be recorded by the controller of the printing system on the microchip. In this case, the data may include information such as the number of pages or length of web that have been printed or transported using the belt, or previously measured belt parameters such as belt length, to assist in recalibrating the printing system when commencing a new print run. Reading and writing on the microchip may be achieved by making direct electrical contact with terminals of the microchip, in which case contact conductors may be provided on the surface of the belt. Alternatively, data may be read from the microchip using radio signals, in which case the microchip may be powered by an inductive loop printed on the surface of the belt.

As its length is important, the belt is required to resist irreversible stretching and creep. In the transverse direction, on the other hand, it is only required to maintain the belt flat taut without creating excessive drag due to friction with the support plates **130.** It is for this reason that, in an embodiment of the invention, the elasticity of the belt is intentionally made anisotropic.

The lateral tracks may be positioned at a distance greater than the overall width of the belt. In a further embodiment, the lateral stress applied to the belt can be adjusted or maintained by modifying the distance between the lateral tracks.

### Belt Pre-treatment

Figure 1 shows schematically a roller **190** positioned immediately before the roller **106,** according to an embodiment of the invention. The function of this roller is, if required, to apply a thin film of pre-treatment or conditioning solution containing a chemical agent, for example a dilute solution of a charged polymer, to the surface of the belt. The film is preferably totally dried by the time it reaches the print bars of the image forming system **300,** to leave behind a very thin layer on the surface of the belt that assists the ink droplets to retain their film-like shape after they have impacted the surface of the belt.

While a roller can be used to apply an even film, in an alternative embodiment the optional pre-treatment solution can be sprayed onto the surface of the belt and spread more evenly, for example by the application of a jet from an air knife, a drizzle from sprinkles or undulations from a fountain. The pre-treatment solution may be removed from the transfer member shortly following its exposure therewith (*e.g.* using air flow).. Release layers of belts amenable to such treatment may comprise a silanol-, sylyl- or silane- modified or terminated polydialkylsiloxane silicone.

As an alternative embodiment, the release layer may be made of a silicone composition having suitable built-in charges or internal charging properties (*e.g.* an amino silicone), so that the above-described ink droplet substantial "freezing" upon impact on the intermediate transfer member is achieved without the application of an external chemical agent.

While not wishing to be bound by theory, it is believed that the fixing of aqueous ink droplets on the hydrophobic surface of a belt according to one embodiment of the invention is the result of a Brønsted-Lowry interaction between organic polymeric resin(s) in the ink and the chemical agent applied to the belt or a component of the release layer of the belt. In this particular embodiment, there is no chemical reaction that affects the composition of the ink or the surface of the belt but an electrostatic attraction between polar molecules in the ink and those on or in the release layer, that prevents the ink droplets from contracting or from moving around on the hydrophobic release surface of the belt, at least during the time period required to evaporate the ink carrier from the ink image.

### Ink Image Heating

The heaters **132** inserted into the support plates **130** are used to heat the belt to a temperature that is appropriate for the rapid evaporation of the ink carrier and compatible with the composition of the belt. For belts comprising for instance silanol-terminated polydialkylsiloxane silicones in the release layer, heating is typically of the order of 150°C, though this temperature may vary within a range from 120°C to 180°C, depending on various factors such as the composition of the inks and/or of the pre-treatment solutions if needed. Belts comprising amino silicones may generally be heated to temperatures between 70°C and 130°C. When, as illustrated, the transfer member is heated from beneath, it is desirable for the belt to have relatively high thermal capacity and low thermal conductivity, so that the temperature of the body of the belt **102** will not change significantly as it moves between the optional pre-treatment station, the image forming station and the impression station(s). Additionally and alternatively, as shall be exemplified with the alternative architecture illustrated by Figure 11 described below, the ink image and the intermediate transfer member may be subjected to a different temperature regimen at different stations. For example, in some embodiments wherein the belt of the invention may be used, the temperature on the outer surface of the intermediate transfer member at the image forming station can be in a range between 40°C and 160°C, or between 60°C and 90°C. In some embodiments, the belt may be submitted to additional heating in a range between 90°C and 300°C, or between 150°C and 250°C, to further dry the ink image, at a drying station. At the image impression station, the belt may sustain temperatures in a range between 80°C and 220°C, or between 100°C and 160°C. If it is desired to allow the transfer member to enter the image forming station at a temperature that would be compatible to the operative range of such station, the printing system may further comprise a cooling station to decrease the belt temperature to a range between 40°C and 90°C.

To apply heat at different rates to the ink image carried by the surface of the transfer member, external heaters or energy sources (not shown) may be used to apply additional energy locally, for example prior to reaching the impression stations to render the ink residue tacky, prior to the image forming station to dry the optional pre-treatment agent and at the image forming station to start evaporating the carrier from the ink droplets as soon as possible after they impact the surface of the belt.

The external heaters may be, for example, hot gas or air blowers or radiant heaters schematically represented as **306** in Figure 1 focusing, for example, infra red radiation onto the surface of the belt, which may attain temperatures in excess of 175°C, 190°C, 200°C, 210°C, or even 220°C.

In addition, the vapor formed by the evaporation of the ink carrier as a result of the aforementioned heating may be evacuated or removed from their region of formation in the vicinity of the intermediate transfer member by a suitable gas moving apparatus.

If the ink contains components sensitive to ultraviolet light then a UV source may be used to help cure the ink as it is being transported by the belt.

### Substrate Transport Systems

The substrate transport system may be designed as in the case of the embodiment of Figures 1 and 2 to transport individual sheets of substrate to the impression stations or, as is shown in Figure 5, to transport a continuous web of the substrate.

In the case of Figures 1 and 2, individual sheets are advanced, for example by a reciprocating arm, from the top of an input stack **506** to a first transport roller **520** that feeds the sheet to the impression cylinder **502** at the first impression station.

Though not shown in the drawings, but known *per se,* the various transport rollers and impression cylinders may incorporate grippers that are cam operated to open and close at appropriate times in synchronism with their rotation so as to clamp the leading edge of each sheet of substrate. In an embodiment of the invention, the tips of the grippers, at least of the impression cylinders **502** and **504,** are designed not to project beyond the outer surface of the cylinders to avoid damaging the belt **102.**

After an image has been impressed onto one side of a substrate sheet during passage between the impression cylinder **502** and the belt **102** applied thereon by pressure roller **140,** the sheet is fed by a transport roller **522** to a perfecting cylinder **524** that has a circumference that is twice as large as the impression cylinders **502, 504.** The leading edge of the sheet is transported by the perfecting cylinder past a transport roller **526,** of which the grippers are timed to catch the trailing edge of the sheet carried by the perfecting cylinder and to feed the sheet to the second impression cylinder **504** to have a second image impressed onto its reverse side. The sheet, which has now had images printed onto both its sides, can be advanced by a belt conveyor **530** from the second impression cylinder **504** to the output stack **508.** In one embodiment, the belt of conveyor **530** is constructed as detailed herein for a belt serving as intermediate transfer member.

As the images printed on the belt are always spaced from one another by a distance corresponding to the circumference of the impression cylinders, or half of it when the cylinder can accommodate two substrates (*e.g.* having two set of grippers), it is important for the distance between the two impression stations also to be equal to the circumference of the impression cylinders **502, 504** or a multiple of this distance. The length the individual images on the belt is of course dependent on the size of the substrate not on the size of the impression cylinder.

In the embodiment shown in Figure 5, a web **560** of the substrate is drawn from a supply roll (not shown) and passes over a number of guide rollers **550** with fixed axes and stationary cylinders **551** that guide the web past the single impression cylinder **502** which forms a unique impression station.

Some of the rollers over which the web **560** passes do not have fixed axes. In particular, on the in-feed side of the web **560,** a roller **552** is provided that can move vertically. By virtue of its weight alone, or if desired with the assistance of a spring acting on its axle, the roller **552** serves to maintain a constant tension in the web **560.** If, for any reason, the supply roller offers temporary resistance, the roller **552** will rise and conversely the roller **552** will move down automatically to take up slack in the web drawn from the supply roll.

At the impression station, the web **560** is required to move at the same speed as the surface of the belt. As earlier explained, the images on the belt must be spaced apart by the circumference of the impression cylinder **502,** and within this spacing it is necessary to be able to accommodate the length of belt within which no printing can take place on account of the possible presence of the seam. If the web **560** were therefore to be permanently engaged with the belt **102** at the impression station formed with impression cylinder **502,** then much of the substrate lying between printed images would need to be wasted.

To mitigate this problem, there are provided, straddling the impression station, two so-called dancers **554** and **556,** these being motorized rollers that are moved up and down in opposite directions in synchronism with one another. After an image has been impressed on the web, the pressure roller **140** is disengaged to allow the web **560** and the belt to move relative to one another. Immediately after disengagement, the dancer **554** is moved downwards at the same time as the dancer **556** is moved up. Though the remainder of the web continues to move forward at its normal speed, the movement of the dancers **554** and **556** has the effect of moving a short length of the web **560** backwards through the gap between the impression cylinder **502** and the belt **102** from which it is disengaged. This is done by taking up slack from the run of web following the impression station and transferring it to the run preceding the impression station. The motion of the dancers is then reversed to return them to their illustrated position so that the section of web at the impression station is again accelerated up to the speed of the belt. The pressure roller **140** can now be re-engaged to impress the next image on the web but without leaving large blank areas between the images printed on the web.

The web transport system illustrated in Figure 5 is only designed for printing on one side of the substrate. For double sided printing on a web, it is possible either to repeat the printing on the reverse side of the web after it has been wound onto a take-up roll or to reverse the web using suitably inclined rollers and to feed it through a second printing system arranged in series or side by side with the illustrated printing system.

Alternatively, if the width of the belt exceeds twice the width of the web, it is possible to use the two halves of the same belt and the same impression cylinder to print on the opposite sides of different sections of the web at the same time.

The printing system of Figure 11, which is described in greater detail in co-pending patent application PCT/IB2013/051718 (Agent's reference LIP 5/006 PCT) comprises an endless belt **610** that cycles through an image forming station **612, a** drying station **614,** and an impression station **616.**

In the image forming station **612** four separate print bars **622** incorporating one or more print heads, that use inkjet technology, deposit ink droplets of different colors onto the surface of the belt **610.** Though the illustrated embodiment has four print bars **622** each able to deposit one of the typical four different colors (namely Cyan (C), Magenta (M), Yellow (Y) and Black (K)), it is possible for the image forming station to have a different number of print bars and for the print bars to deposit different shades of the same color (*e.g.* various shades of grey including black) or for more two print bars or more to deposit the same color (*e.g.* black). Following each print bar **622** in the image forming station, an intermediate drying system **624** is provided to blow hot gas (usually air) onto the surface of the belt **610** to dry the ink droplets partially. This hot gas flow assists in preventing blockage of the inkjet nozzles and also prevents the droplets of different color inks on the belt **610** from merging into one another. In the drying station **614,** the ink droplets on the belt **610** are exposed to radiation and/or hot gas in order to dry the ink more thoroughly, driving off most, if not all, of the liquid carrier and leaving behind only a layer of resin and coloring agent which is heated to the point of being rendered tacky.

In the impression station **616,** the belt **610** passes between an impression cylinder **620** and a pressure cylinder **618** that carries a compressible blanket **619.** The length of the blanket **619** is equal to or greater than the maximum length of a sheet **626** of substrate on which printing is to take place. The impression cylinder **620** has twice the diameter of the pressure cylinder **618** and can support two sheets **626** of substrate at the same time. Sheets **626** of substrate are carried by a suitable transport mechanism (not shown in Figure 11) from a supply stack **628** and passed through the nip between the impression cylinder **620** and the pressure cylinder **618.** Within the nip, the surface of the belt **620** carrying the tacky ink image is pressed firmly by the blanket **619** on the pressure cylinder **618** against the substrate **626** so that the ink image is impressed onto the substrate and separated neatly from the surface of the belt. The substrate is then transported to an output stack **630.** In some embodiments, a heater **631** may be provided shortly prior to the nip between the two cylinders **618** and **620** of the image impression station **616** to assist in rendering the ink film tacky, so as to facilitate transfer to the substrate.

In the embodiment of Figure 11, the surface of the belt **610** used to transport the ink images forms part of a separate element from the thick blanket **619** that is needed to press it against the substrate sheets **626.** In Figure 11, this surface is formed on a flexible thin inextensible belt **610** that is preferably fiber reinforced for increased tensile strength in its lengthwise dimension (*e.g.* with high performance fibers).

As shown schematically in Figures 12 and 13, as with the embodiment of Figures 1 to 5, the lateral edges of the belt **610** can be provided with formations in the form of spaced projections **670** which on each side are received in a respective guide channel **680** (shown in section in Figure 13) in order to maintain the belt taut in its width ways dimension. The projections **670** may be the teeth of one half of a zip fastener that is sewn or otherwise secured to the lateral edge of the belt. As an alternative to spaced projections, a continuous flexible bead of greater thickness than the belt **610** may once again be provided along each side. To reduce friction, the guide channel **680** may, as shown in Figure 13, have rolling bearing elements **682** to retain the projections **670** or the beads within the channel **680.**

Guide channels **680** in the image forming station ensure accurate placement of the ink droplets on the belt **610.** Likewise, guide channels in the impression station **616** ensure accurate placement of the image on the substrate. In other areas, such as within the drying station **614,** lateral guide channels are desirable but less important. In regions where the belt **610** has slack, no guide channels are present.

It is important for the belt **610** to move with constant speed through the image forming station **612** as any hesitation or vibration will affect the registration of the ink droplets of different colors. To assist in guiding the belt smoothly, friction is reduced by passing the belt over rollers **632** adjacent each printing bar **622** instead of sliding the belt over stationary guide plates. The rollers **632** need not be precisely aligned with their respective print bars **622.** They may be located slightly (*e.g.* a few millimeters) downstream of the print head jetting location. The frictional forces maintain the belt taut and substantially parallel to print bars. The underside of the belt may therefore have high frictional properties as it is only ever in rolling contact with all the surfaces on which it is guided. The lateral tension applied by the guide channels need only be sufficient to maintain the belt **610** flat and in contact with rollers **632** as it passes beneath the print bars **622.** Aside from the inextensible reinforcement/support layer, the hydrophobic release surface layer and high friction underside, the belt **610** is not required to serve any other function. It may therefore be a thin light inexpensive belt that is easy to remove and replace, should it become worn.

It is possible for the belt **610** to be seamless, that is it to say without discontinuities anywhere along its length. Such a belt would considerably simplify the control of the printing system as it may be operated at all times to run at the same surface velocity as the circumferential velocity of the two cylinders **618** and **620** of the impression station. Any stretching of the belt with ageing would not affect the performance of the printing system and would merely require the taking up of more slack by tensioning rollers **650** and **652,** detailed below.

It is however less costly to form the belt as an initially flat strip of which the opposite ends are secured to one another, for example by a zip fastener or possibly by a strip of hook and loop tape or possibly by soldering the edges together or possibly by using tape (*e.g.* Kapton® tape, RTV liquid adhesives or PTFE thermoplastic adhesives with a connective strip overlapping both edges of the strip). In such a construction of the belt, it is essential to ensure that printing does not take place on the seam and that the seam is not flattened against the substrate **626** in the impression station **616.**

The impression and pressure cylinders **618** and **620** of the impression station **616** may be constructed in the same manner as the blanket and impression cylinders of a conventional offset litho press. In such cylinders, there is a circumferential discontinuity in the surface of the pressure cylinder **618** in the region where the two ends of the blanket **619** are clamped. There may also be discontinuities in the surface of the impression cylinder, for instance to accommodate grippers that serve to grip the leading edges of the substrate sheets to help transport them through the nip. In the illustrated embodiments of the invention, the impression cylinder circumference is twice that of the compressible blanket cylinder and the impression cylinder has two sets of grippers, so that the discontinuities line up twice every cycle for the impression cylinder. Alternatively the printing system may not require grippers (*e.g.* for web substrate), in which case the impression cylinder may have a continuous surface devoid of recess.

If the belt **610** has a seam, then it is necessary to ensure that the seam always coincides in time with the gap between the cylinders of the impression station **616.** For this reason, it is desirable for the length of the belt **610** to be equal to a whole number multiple of the circumference of the pressure cylinder **618.**

However, even if the belt has such a length when new, its length may change during use, for example with fatigue or temperature, and should that occur the phase of the seam during its passage through the nip will change every cycle.

To compensate for such change in the length of the belt **610,** it may be driven at a slightly different speed from the cylinders of the impression station **616.** The belt **610** is driven by two separately powered rollers **640** and **642.** By applying different torques through the rollers **640** and **642** driving the belt, the run of the belt passing through the image forming station is maintained under controlled tension. The speed of the two rollers **640** and **642** can be set to be different from the surface velocity of the cylinders **618** and **620** of the impression station **616.**

Two powered tensioning rollers, or dancers, **650** and **652** are provided one on each side of the nip between the cylinders of the impression station. These two dancers **650, 652** are used to control the length of slack in the belt **610** before and after the nip and their movement is schematically represented by double sided arrows adjacent the respective dancers.

Figures 12 and 13 additionally show details that assist in the installation of a replacement belt **610.** The leading edge **611** of the strip from which the belt is formed may be cut an angle to facilitate its feeding through various narrow gaps such as the nip of the impression station **616** or the gap between the print bars **622** and the rollers **632.** It is furthermore possible to stiffen the leading edge **611** to allow the belt to be gripped and advanced more easily. The leading edge may later be trimmed when it is secured to the trailing end to form a continuous loop. Alternatively, the leading edge may be a device reversibly attached to one end of the strip during installation of the belt and removed before securing the ends.

Figure 13 shows a loop of cable **684** that is permanently housed in one or both of the tracks **680.** It is possible to anchor the leading end of the replacement belt to the cable **684** then to use the cable to feed the strip through the various tracks **684.** During normal use, the cable(s) **684** remains stationary in the tracks **680** and is only rotated during installation of a new belt **610.**

The present invention has been described using detailed descriptions of embodiments thereof that are provided by way of example and are not intended to limit the scope of the invention. The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons skilled in the art to which the invention pertains.

In the description and claims of the present disclosure, each of the verbs, "comprise" "include" and "have", and conjugates thereof, are used to indicate that the object or objects of the verb are not necessarily a complete listing of members, components, elements or parts of the subject or subjects of the verb. As used herein, the singular form "a", "an" and "the" include plural references unless the context clearly dictates otherwise. For example, the term "a formation" or "at least one formation" may include a plurality of formations.

## Claims

1. A flexible belt (102) for use in a printing system, comprising an elongate strip having parallel straight sides of which the ends are releasably or permanently securable to one another to form an endless loop, which belt, when in use, travels along a continuous path and serves to transport ink images from an image forming station (100) to an impression station (502,504) of the printing system, **characterized in that** the belt (102) has a degree of elasticity in a width ways direction that is greater than the elasticity of the belt in a longitudinal direction and wherein formations (622) are provided along the sides of the strip which are capable of engaging with lateral tracks (120) in such a manner as to place the belt under width ways tension and to constrain the belt to follow a continuous path defined by the lateral tracks.

2. A flexible belt as claimed in claim 1, wherein the strip comprises an elastically anisotropic reinforcement layer and a release layer.

3. A flexible belt as claimed in claim 2, wherein the strip additionally includes a compressible layer.

4. A flexible belt as claimed in any preceding claim, wherein at least one side of the strip is provided with a plurality of formations (622) that are spaced from one another along the length of the strip.

5. A flexible belt as claimed in claim 4, wherein the spaced formations (622) are teeth of one half of a zip fastener that is secured to the belt along the side of the strip.

6. A flexible belt as claimed in any one of claims 1 to 3, wherein the formations comprises two flexible beads of greater thickness than the strip, arranged one on each side of the strip.

7. A flexible belt as claimed in any preceding claim, wherein the formations (622) are made of a material having a low friction coefficient to ensure smooth running of the formations within the lateral tracks.

8. A flexible belt as claimed in claim 7, wherein the formations (622) are made of a polyamide polymer supplemented with molybdenum disulfide or of a polyacetal filled with PTFE.

9. A flexible belt as claimed in any preceding claim, wherein the formations (622) have an anti-friction coating of PTFE.

10. A flexible belt as claimed in any preceding claim, wherein the belt includes one or more markings detectable by a sensor of the printing system.

11. A belt system (100) including a flexible belt (102) as claimed in any preceding claim and a support frame guiding and driving the belt, wherein the support frame further includes two lateral guiding tracks (120), extending one on each side of the belt, each track being of suitable cross-section to slidably retain the formations (622) on the sides of the belt.

12. A belt system as claimed in claim 11, wherein the belt is an intermediate transfer member of a printing system and lateral guiding tracks are provided to guide and tension the belt in the region of an image forming station at which an ink image is deposited on the belt.

13. A belt system as claimed in claim 12, wherein guiding tracks are additionally provided at an impression station at which ink images carried by the belt are impressed onto a substrate.

14. A belt system as claimed in any of claims 11 to 13, wherein plates are mounted on the support frame having support surfaces contacting the inner side of the belt, the support surfaces lying in a plane offset from a flat plane passing through the two tracks such that lateral tension in the belt, resulting from engagement of the formations in the tracks, serves to flatten the belt against the support surfaces.

15. A belt system as claimed in any of claims 11 to 13, wherein the support frame comprises at a location to be aligned with an image forming station of a printing system rollers upon which the inner side of the belt passes, when in use, said rollers being adjacent to print bars of the image forming station that overlie the belt, the latter rollers lying in a plane offset from a flat plane passing through the two tracks such that lateral tension in the belt, resulting from engagement of the formations in the tracks, serves to flatten the belt against the surfaces of the rollers.

## Patentansprüche

1. Flexibler Riemen (102) zur Verwendung in einem Drucksystem, umfassend einen länglichen Streifen mit parallelen geraden Seiten, deren Enden lösbar oder dauerhaft aneinander gesichert werden können, um eine Endlosbandschleife zu bilden, wobei der Riemen bei Verwendung entlang einer stetigen Bahn verläuft und dazu dient, Tintenbilder von einer Bilderzeugungsstation (100) zu einer Aufdruckstation (502, 504) des Drucksystems zu transportieren,
**dadurch gekennzeichnet, dass** der Riemen (102) in einer Breitenrichtung einen Elastizitätsgrad aufweist, der größer ist als die Elastizität des Riemens in eine Längsrichtung, und wobei Formationen (622) entlang den Seiten des Streifens bereitgestellt sind, die mit lateralen Spuren (120) so eingreifen können, dass der Riemen unter Spannung in die Breitenrichtung platziert wird und der Riemen so eingeschränkt wird, dass er einer durch die lateralen Spuren definierten stetigen Bahn folgt.

2. Flexibler Riemen nach Anspruch 1, wobei der Streifen eine elastisch anisotrope Verstärkungsschicht und eine Ablöseschicht umfasst.

3. Flexibler Riemen nach Anspruch 2, wobei der Streifen zusätzlich eine komprimierbare Schicht aufweist.

4. Flexibler Riemen nach einem der vorstehenden Ansprüche, wobei wenigstens eine Seite des Streifens mit einer Mehrzahl von Formationen (622) versehen ist, die entlang der Länge des Streifens mit Zwischenabständen angeordnet sind.

5. Flexibler Riemen nach Anspruch 4, wobei die beabstandeten Formationen (622) Zähne einer Hälfte eines Reißverschlusses sind, der entlang der Seite des Streifens an dem Riemen gesichert ist.

6. Flexibler Riemen nach einem der Ansprüche 1 bis 3, wobei die Formationen zwei flexible Beads umfassen, die dicker sind als der Streifen und auf jeder Seite des Streifens angeordnet sind.

7. Flexibler Riemen nach einem der vorstehenden Ansprüche, wobei die Formationen (622) aus einem Material mit einem niedrigen Reibungskoeffizienten bestehen, um einen ruhigen Lauf der Formationen in den lateralen Spuren sicherzustellen.

8. Flexibler Riemen nach Anspruch 7, wobei die Formationen (622) aus einem Polyamidpolymer, mit zugesetztem Molybdänsulfid oder einem mit PTFE gefüllten Polyacetal hergestellt werden.

9. Flexibler Riemen nach einem der vorstehenden Ansprüche, wobei die Formationen (622) einen Gleitüberzug aus PTFE aufweisen.

10. Flexibler Riemen nach einem der vorstehenden Ansprüche, wobei der Riemen eine oder mehrere durch einen Sensor des Drucksystems erkennbare Markierungen aufweist.

11. Riemensystem (100) mit einem flexiblen Riemen (102) nach einem der vorstehenden Ansprüche und einem Stützrahmen, der den Riemen führt und antreibt, wobei der Stützrahmen ferner zwei laterale Führungsspuren (120) aufweist, die sich auf jeder Seite des Riemens erstrecken, wobei jede Spur einen geeigneten Querschnitt aufweist, um die Formationen (622) verschiebbar auf den Seiten des Riemens zu halten.

12. Riemensystem nach Anspruch 11, wobei der Riemen ein intermediäres Übertragungselement eines Drucksystems ist, und wobei laterale Führungsspuren bereitgestellt sind, um den Riemen in dem Bereich einer Bilderzeugungsstation zu führen und zu spannen, wo das Tintenbild auf dem Riemen abgeschieden wird.

13. Riemensystem nach Anspruch 12, wobei zusätzlich führende Spuren an einer Aufdruckstation bereitgestellt sind, an welcher durch den Riemen beförderte Tintenbilder auf das Substrat aufgedruckt werden.

14. Riemensystem nach einem der Ansprüche 11 bis 13, wobei Platten an dem Stützrahmen montiert sind, mit Stützflächen, welche die Innenseite des Riemens berühren, wobei die Stützflächen in einer Ebene liegen, die von einer flachen Ebene versetzt sind, die durch die zwei Spuren verläuft, so dass laterale Spannung in dem Riemen, die aus dem Eingriff der Formationen in den Spuren resultiert, dazu dient, den Riemen gegen die Stützflächen zu glätten.

15. Riemensystem nach einem der Ansprüche 11 bis 13, wobei der Stützrahmen an einer Position für eine Ausrichtung mit einer Bilderzeugungsstation eines Drucksystems Walzen umfasst, auf denen die Innenseite des Riemens läuft, wobei sich die Walzen bei Verwendung angrenzend an Druckbalken der Bilderzeugungsstation befinden, welche über dem Riemen angeordnet sind, wobei die letzteren Walzen in einer Ebene liegen, die von einer flachen Ebene versetzt ist, die durch die beiden Spuren verläuft, so dass laterale Spannung in dem Riemen, die aus dem Eingriff der Formationen in den Spuren resultiert, dazu dient, den Riemen gegen die Oberflächen der Walzen zu glätten.

## Revendications

1. Courroie souple (102) destinée à être utilisée dans un système d'impression, comprenant une bande allongée ayant des côtés droits parallèles dont les extrémités peuvent être fixées l'une à l'autre de manière amovible ou permanente pour former une boucle sans fin, ladite courroie, lors de l'utilisation, se déplaçant le long d'un trajet continu et servant à transporter des images d'encre d'une station de formation d'image (100) à une station d'impression (502, 504) du système d'impression, **caractérisée en ce que** la courroie (102) a un degré d'élasticité dans une direction transversale qui est supérieur à l'élasticité de la courroie dans une direction longitudinale et des formations (622) étant disposées le long des côtés de la bande qui peuvent venir en prise avec des pistes latérales (120) de sorte à placer la courroie sous tension transversale et à limiter la courroie pour qu'elle suive une trajectoire continue définie par les pistes latérales.

2. Courroie souple selon la revendication 1, la bande comprenant une couche de renforcement élastiquement anisotrope et une couche de séparation.

3. Courroie souple selon la revendication 2, **caractérisée en ce que** la bande comprend en outre une couche compressible.

4. Courroie souple selon l'une quelconque des revendications précédentes, au moins un côté de la bande comprenant une pluralité de formations (622) qui sont espacées les unes des autres sur la longueur de la bande.

5. Courroie souple selon la revendication 4, les formations (622) espacées étant les dents d'une moitié d'une fermeture à glissière qui est fixée à la courroie le long du côté de la bande.

6. Courroie souple selon l'une quelconque des revendications 1 à 3, les formations comprenant deux bourrelets souples d'une épaisseur supérieure à celle de la bande, disposés de chaque côté de la bande.

7. Courroie souple selon l'une quelconque des revendications précédentes, les formations (622) étant constituées en un matériau ayant un faible coefficient de frottement pour assurer le bon passage des formations dans les voies latérales.

8. Courroie souple selon la revendication 7, **caractérisée en ce que** les formations (622) sont en un polymère polyamide complété par du bisulfure de molybdène ou d'un polyacétal chargé de PTFE.

9. Courroie souple selon l'une quelconque des revendications précédentes, les formations (622) ayant un revêtement antifriction en PTFE.

10. Courroie souple selon l'une quelconque des revendications précédentes, la courroie comprenant un ou plusieurs marquages détectables par un capteur du système d'impression.

11. Système de courroie (100) comprenant une courroie souple (102) selon l'une quelconque des revendications précédentes et un cadre de support guidant et entraînant la courroie, le cadre de support comprenant en outre deux pistes de guidage latérales (120), s'étendant de chaque côté de la courroie, chaque piste ayant une section transversale appropriée pour retenir par glissement les formations (622) sur les côtés de la courroie.

12. Système de courroie selon la revendication 11, la courroie étant un élément de transfert intermédiaire d'un système d'impression et des pistes de guidage latérales étant fournies pour guider et tendre la courroie dans la région d'une station de formation d'image où une image d'encre est déposée sur la courroie.

13. Système de courroie selon la revendication 12, des pistes de guidage étant en outre fournies au niveau d'une station d'impression où des images d'encre portées par la courroie sont imprimées sur un substrat.

14. Système de courroie selon l'une quelconque des revendications 11 à 13, des plaques étant montées sur le cadre de support ayant des surfaces de support en contact avec le côté intérieur de la courroie, les surfaces de support se trouvant dans un plan décalé par rapport à un plan plat passant par les deux pistes, de sorte que la tension latérale de la courroie, résultant de la mise en prise des formations dans les pistes, serve à aplatir la courroie contre les surfaces de support.

15. Système de courroie selon l'une quelconque des revendications 11 à 13, le cadre de support comprenant, au niveau d'un emplacement à aligner avec une station de formation d'image d'un système d'impression, des rouleaux sur lesquels passe le côté intérieur de la courroie, lorsqu'ils sont utilisés, lesdits rouleaux étant adjacents aux barres d'impression de la station de formation d'image qui recouvre la courroie, ces rouleaux reposant dans un plan décalé d'un plan plat passant par les deux pistes, de sorte que la tension latérale dans la courroie, résultant de la mise en prise des formations dans les pistes, sert à aplatir la courroie contre les surfaces des rouleaux.
